# EUROPEAN PATENT SPECIFICATION

(11) **EP 4 779 566 B1**
(45) Date of publication and mention of the grant of the patent: **04.11.2026**
(21) Application number: 24865521.9
(22) Date of filing: 12.09.2024
(51) Int. Cl.: G06T 7/60, D06H 3/08, G06T 7/00, G06T 7/10, G06T 7/70

(54) **IMAGE PROCESSING DEVICE, IMAGE PROCESSING METHOD, AND PROGRAM**
BILDVERARBEITUNGSVORRICHTUNG, BILDVERARBEITUNGSVERFAHREN UND PROGRAMM
DISPOSITIF DE TRAITEMENT D'IMAGES, PROCÉDÉ DE TRAITEMENT D'IMAGES ET PROGRAMME

(30) Priority: 15.09.2023 JP 2023150364
(43) Date of publication of application: 22.07.2026
(73) Proprietor: Resonac Corporation, Tokyo 105-7325 (JP)
(72) Inventor: MATSUI, Akira, Tokyo 105-7325 (JP); SHIMIZU, Yohei, Tokyo 105-7325 (JP); OKANO, Yu, Tokyo 105-7325 (JP); IKADAI, Hiroto, Tokyo 105-7325 (JP); OTAKE, Hiromi, Tokyo 105-7325 (JP); TANAKA, Naotaka, Tokyo 105-7325 (JP)
(74) Representative: Strehl & Partner mbB
(86) International application number: PCT/JP2024/032719
(87) International publication number: WO 2025/058021

(56) References cited:
- JP-A- 2022 110 282
- JP-A- 2022 110 282
- US-A1- 2022 371 057
- US-B2- 8 571 267
- EHSAN MORADPUR-TARI ET AL: "Nano1D: An accurate Computer Vision model for segmentation and analysis of low-dimensional objects", ARXIV.ORG CORNELL UNIVERSITY LIBRARY, 201 OLIN LIBRARY CORNELL UNIVERSITY ITHACA, NY 14853, 27 June 2023 (2023-06-27), XP091587133
- SOSA-REY FACUNDO ET AL: "OpenFiberSeg: Open-source segmentation of individual fibers and porosity in tomographic scans of additively manufactured short fiber reinforced composites", COMPOSITES SCIENCE AND TECHNOLOGY, vol. 226, 1 July 2022 (2022-07-01), AMSTERDAM, NL, pages 109497, XP093405860, ISSN: 0266-3538, DOI: 10.1016/j.compscitech.2022.109497

## Description

### TECHNICAL FIELD

The present invention relates to image processing devices, image processing methods, and programs.

### BACKGROUND ART

A technique of detecting an axis of each of fibers in an image capturing the fibers is known. For example, Patent Document 1 discloses a line segment detector. In order to measure a fiber length in a composite material including fibers and a filler, the disclosed line segment detector binarizes an image capturing the composite material, performs thinning of the binarized image, applies a plurality of line segments to a set of feature points extracted from the thinned image, and integrates the applied line segments into one line segment.

### RELATED ART DOCUMENTS

### DOCUMENTS

Patent Document 1: Japanese Laid-Open Patent Publication No. 2021-140605
Patent Document 2:
   JP 2022 110282 A (KURASHIKI BOSEKI KK) 29 July 2022 (2022-07-29)
Patent Document 3:
   US 8 571 267 B2 (KATTI DHIRENDRA S [IN]; PAL ANUPAM [IN] ET AL.) 29 October 2013 (2013-10-29)
XP Document 1:
   EHSAN MORADPUR-TARI ET AL: "Nano1D: An accurate Computer Vision model for segmentation and analysis of low-dimensional objects",ARXIV.ORG CORNELL UNIVERSITY LIBRARY, 201 OLIN LIBRARY CORNELL UNIVERSITY ITHACA, NY 14853, 27 June 2023 (2023-06-27)
XP Document 2:
   SOSA-REY FACUNDO ET AL: "OpenFiberSeg: Open-source segmentation of individual fibers and porosity in tomographic scans of additively manufactured short fiber reinforced composites",COMPOSITES SCIENCE AND TECHNOLOGY, vol. 226, 1 July 2022 (2022-07-01), pages 1094-97

### DISCLOSURE OF THE INVENTION

### PROBLEMS TO BE SOLVED BY THE INVENTION

However, the technology of the related art has a problem of low detection accuracy when an axis of each of fibers is detected from an image capturing the fibers. For example, in the case where multiple fibers intersect with one another and appear to be discontinuous, the axes of the fibers may be distorted. In addition, in the case where fibers are densely arranged, it is difficult to individually detect the axis of each of the fibers.

One aspect of the present disclosure aims to accurately detect axes of fibers in an image.

### MEANS FOR SOLVING THE PROBLEMS

The present disclosure includes the following configurations.
<1> An image processing device includes:
   an image acquisition part configured to acquire a target image in which fibers are captured;
   a first segmentation part configured to generate a first segmentation result indicating regions in which the fibers are individually detected in the target image, respectively, using an individual-object segmentation model;
   a second segmentation part configured to generate a second segmentation result indicating regions in which the fibers are captured in the target image;
   a thinning part configured to generate a first thinning result and a second thinning result that are the first segmentation result and the second segmentation result subjected to thinning, respectively; and
   a result output part configured to output an analysis result indicating axes of the fibers included in the target image based on the first thinning result and the second thinning result.
<2> The image processing device according to <1>,
   wherein the analysis result is a logical conjunction of the first thinning result and the second thinning result.
<3> The image processing device according to <2>, further includes:
   an expansion part configured to expand the first thinning result and the second thinning result.
<4> The image processing device according to any one of <1> to <3>,
   wherein the second segmentation part is configured to recognize the regions in which the fibers are captured using a category segmentation model.
<5> The image processing device according to <4>,
   wherein the category segmentation model is DeepLab or U-Net.
<6> The image processing device according to any one of <1> to <3>,
   wherein the second segmentation part is configured to binarize the target image.
<7> The image processing device according to any one of <1> to <6>,
   wherein the first segmentation part is configured to recognize the regions in which the fibers are individually captured, respectively, using the individual-object segmentation model.
<8> The image processing device according to <7>,
   wherein the individual-object segmentation model is Mask R-CNN or YOLACT.
<9> The image processing device according to any one of <1> to <8>,
   wherein the second segmentation part is configured to binarize the first segmentation result.
<10> An image processing method includes causing a computer to perform:
   a process of acquiring a target image in which fibers are captured;
   a process of generating a first segmentation result indicating regions in which the fibers are individually detected in the target image, respectively, using an individual-object segmentation model;
   a process of generating a second segmentation result indicating regions in which the fibers are captured in the target image;
   a process of generating a first thinning result and a second thinning result that are the first segmentation result and the second segmentation result subjected to thinning, respectively; and
   a process of outputting an analysis result indicating axes of the fibers included in the target image based on the first thinning result and the second thinning result.
<11> A program that causes a computer to perform:
   a process of acquiring a target image in which fibers are captured;
   a process of generating a first segmentation result indicating regions in which the fibers are individually detected in the target image, respectively, using an individual-object segmentation model;
   a process of generating a second segmentation result indicating regions in which the fibers are captured in the target image;
   a process of generating a first thinning result and a second thinning result that are the first segmentation result and the second segmentation result subjected to thinning, respectively; and
   a process of outputting an analysis result indicating axes of the fibers included in the target image based on the first thinning result and the second thinning result.

### EFFECTS OF THE INVENTION

According to one aspect of the present disclosure, axes of fibers in an image can be accurately detected.

### BRIEF DESCRIPTION OF THE DRAWINGS

[Fig. 1] Fig. 1 is a block diagram illustrating an example of an overall configuration of an image analysis system.
[Fig. 2] Fig. 2 is a block diagram illustrating an example of a hardware configuration of a computer.
[Fig. 3] Fig. 3 is a block diagram illustrating an example of a functional configuration of the image analysis system.
[Fig. 4] Fig. 4 is a flowchart illustrating an example of the image analysis method.
[Fig. 5] Fig. 5 is a diagram illustrating an example of an individual-fiber thinning result.
[Fig. 6] Fig. 6 is a diagram illustrating an example of a fiber-region thinning result.
[Fig. 7] Fig. 7 is a diagram illustrating an example of an analysis result.

### MODE OF CARRYING OUT THE INVENTION

Embodiments of the present disclosure will be described with reference to the accompanying drawings hereinafter. In the present specification and drawings, constituent components having substantially the same functional configuration are denoted by the same reference numeral, and redundant description will be omitted.

### [Embodiments]

One embodiment of the present disclosure is an image analysis system that analyzes a shape of an object from an image capturing the object. The image to be analyzed may be also referred to as a "target image" hereinafter. The target image of the present embodiment is an image capturing a state in which a large number of fibers are dispersed on a metal surface. The state in which multiple fibers intersect with one another, or a large number of fibers are densely arranged may be captured in the target image. As one example, the fibers in the present embodiment are carbon fibers. However, the fibers to be analyzed are not limited to carbon fibers, and may be fibers of any material.

In the present embodiment, in order to analyze shapes of fibers captured in an image, regions in which the fibers are captured are detected from the image. In the task of detecting a desired object from an image, segmentation using machine learning models may be performed. The segmentation using the machine learning models includes instance segmentation, semantic segmentation, and the like based on deep learning.

The instance segmentation is a task of detecting individual objects included in an image. In the instance segmentation, a rectangular region (bounding box) in which each object is captured may be individually detected in an image, or individual objects may be detected and determined at a pixel level. An object detection result of the instance segmentation may include information indicating, for each of the detected objects, two-dimensional data (mask score) indicating a region in which each object is captured, a score indicating objectness, a mask obtained by binarizing the mask score with a threshold, and information indicating bounding boxes. A size of a bounding box may be adjustable. A size of a mask of each individual object may be adjustable by setting a score threshold. A region of each individual object can be set to be large by setting a large size of the bounding box or a low score threshold. Moreover, the object detection result can also include reliability of the object detection result.

The machine learning model that performs the instance segmentation is one example of the "individual-object segmentation model." The mask scores included in the object detection result of the instance segmentation are one example of the "individual-object segmentation result."

As the machine learning model that performs the instance segmentation, mask region-based convolutional neural networks (Mask R-CNN), You Only Look At CoefficienTs (YOLACT), or the like can be used. The details of Mask R-CNN are disclosed in Reference Document 1.

[Reference Document 1] Kaiming He, Georgia Gkioxari, Piotr Dollar, Ross Girshick, "Mask R-CNN," Proceedings of the IEEE International Conference on Computer Vision (ICCV), 2017.

The semantic segmentation is a task of segmenting a subject constituting an image into one or more categories (classes). In the semantic segmentation, a label indicating a class (class label) is predicted for each unit (e.g., each pixel) of an image. The segmentation result obtained by the semantic segmentation may include two-dimensional data (semantic score) including a class label corresponding to each pixel of the image. Moreover, the segmentation result can include reliability of the segmentation result.

The machine learning model that performs the semantic segmentation is one example of the "category segmentation model." Moreover, the semantic scores included in the segmentation result obtained by the semantic segmentation are one example of the "category segmentation result."

As the machine learning model that performs the semantic segmentation, U-Net, DeepLab, or the like can be used. The details of U-Net are disclosed in Reference Document 2. The details of DeepLab (DeepLab v3) are disclosed in Reference Document 3.

[Reference Document 2] Olaf Ronneberger, Philipp Fischer, and Thomas Brox, "U-Net: Convolutional Networks for Biomedical Image Segmentation," Medical Image Computing and Computer-Assisted Intervention (MICCAI), 2015.

[Reference Document 3] L. C. Chen, G. Papandreou, F. Schroff, and H. Adam, "Rethinking Atrous Convolution for Semantic Image Segmentation," European Conference on Computer Vision (ECCV), 2017.

In order to detect an axis of each of fibers in a target image in which multiple fibers are captured, it is conceivable to perform thinning of regions of fibers recognized in the target image. However, when an object detection result obtained by instance segmentation is subjected to thinning, the axes of the fibers may be distorted, if the fibers intersect with one another and appear to be discontinuous. When a segmentation result obtained by semantic segmentation is subjected to thinning, axes of fibers cannot be individually detected, if a large number of the fibers are densely arranged.

The image analysis system of the present embodiment aims to accurately detect axes of fibers included in an image. The image analysis system performs thinning on an individual-object segmentation result and on a category segmentation result, and outputs an analysis result indicating an axis of each of the fibers based on both thinning results.

According to one aspect of the present embodiment, axes of fibers in an image can be accurately detected. For example, the image analysis system can accurately detect axes of fibers even when the fibers intersect with one another. In addition, the image analysis system can detect only the axes of the fibers having the outlines that do not overlap with other fibers. According to the present embodiment, therefore, it is possible to measure lengths or thicknesses of the fibers captured in the image with high accuracy.

### <Overall configuration of image analysis system>

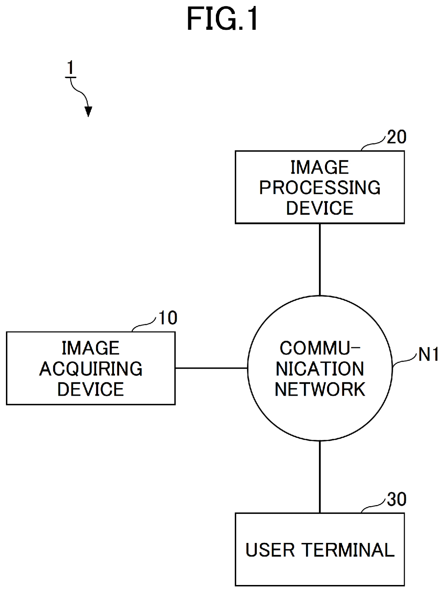

The overall configuration of the image analysis system of the present embodiment will be described with reference to Fig. 1. Fig. 1 is a block diagram illustrating an example of the overall configuration of the image analysis system of the present embodiment.

As illustrated in Fig. 1, the image analysis system 1 of the present embodiment includes an image acquiring device 10, an image processing device 20, and a user terminal 30. The image acquiring device 10, the image processing device 20, and the user terminal 30 are coupled to one another via a local area network (LAN), internet, or the like so that data can be transmitted between the image acquiring device 10, the image processing device 20, and the user terminal 30.

The image acquiring device 10 is an optical device that acquires a target image that is an analysis target. The image acquiring device 10 may be a digital camera capturing static images or a video camera capturing videos. As the image acquiring device 10, an optical microscope, a scanning electron microscope (SEM), a transmission electron electroscope (TEM), or the like can be used according to a size of an object that is a detection target. Moreover, the image acquiring device 10 may be an information processing device, such as a personal computer or the like, coupled to a camera of various kinds, or an inspection device in which a camera of various kinds is mounted.

The image processing device 20 is an image processing device, such as a personal computer, a workstation, a server, or the like, which analyzes a shape of an object from the target image acquired by the image acquiring device 10. The image processing device 20 receives the target image from the user terminal 30. The image processing device 20 analyzes the shape of the object in the acquired target image, and transmits the output image indicating the detection result to the user terminal 30.

The user terminal 30 is an information processing terminal operated by a user, such as a personal computer, a tablet terminal, a smartphone, or the like. In response to an operation of a user, the user terminal 30 acquires the target image from the image acquiring device 10 and transmits the acquired image to the image processing device 20. The user terminal 30 receives the output image indicating the analysis result from the image processing device 20, and outputs the output image to a user.

The overall configuration of the image analysis system 1 illustrated in Fig. 1 is one example, and there are various system configuration examples according to the intended use or purpose. For example, multiple image acquiring devices 10, image processing devices 20, user terminals 30, or any combination of the foregoing may be included in the image analysis system 1. For example, the image processing device 20 may be implemented by multiple computers, or may be implemented through a cloud computing service. The classification of devices illustrated in Fig. 1, such as the image acquiring device 10, the image processing device 20, and the user terminal 30, is one example.

### <Hardware configuration of image analysis system>

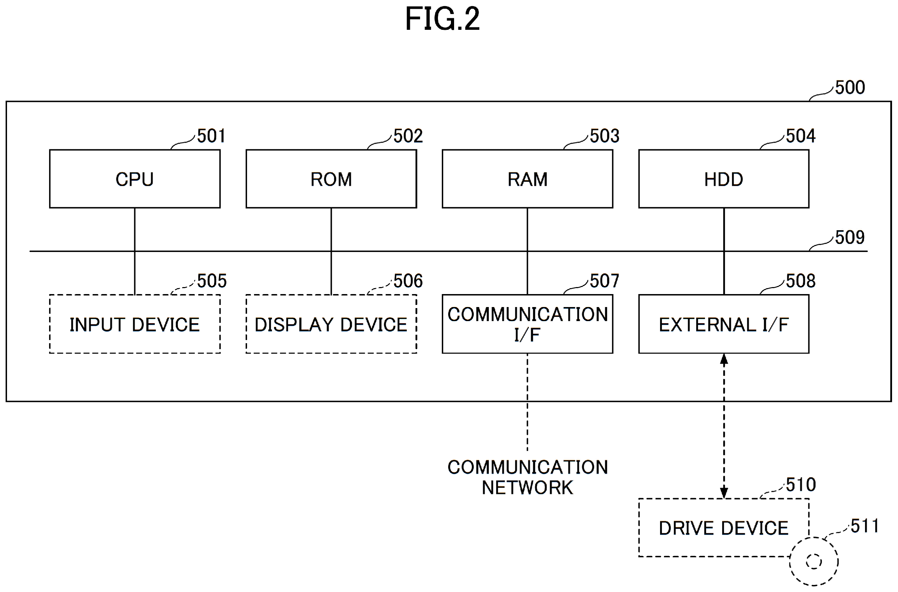

The hardware configuration of the image analysis system 1 of the present embodiment will be described with reference to Fig. 2.

### <<Hardware configuration of computer>>

The image acquiring device 10, the image processing device 20, and the user terminal 30 in the present embodiment can be implemented, for example, by a computer. Fig. 2 is a block diagram illustrating an example of the hardware configuration of the computer 500 of the present embodiment.

As illustrated in Fig. 2, the computer 500 includes a central processing unit (CPU) 501, a read only memory (ROM) 502, a random access memory (RAM) 503, a hard disk drive (HDD) 504, an input device 505, a display device 506, a communication interface (I/F) 507, and an external I/F 508. The CPU 501, the ROM 502, and the RAM 503 constitute what is called a computer. The hardware components of the computer 500 are coupled to one another via a bus line 509. Note that the input device 505 and the display device 506 may be configured to be used by coupling to the external I/F 508.

The CPU 501 is an arithmetic device that reads one or more programs or data from a storage device, such as the ROM 502, the HDD 504, or the like, and loads the read one or more programs or data into a RAM 503 to execute processing, thereby implementing control of the entire computer 500 or functions of the computer 500. The computer 500 may include a graphics processing unit (GPU) in addition to the CPU 501 or instead of the CPU 501.

The ROM 502 is one example of a non-volatile semiconductor memory (storage device) that can retain one or more programs or data even when a power source is turned off. The ROM 502 functions as a main storage device for storing various programs, data, or the like that are necessary for the CPU 501 to execute various programs installed in the HDD 504. Specifically, boot programs to be executed at the time of starting the computer 500, such as a basic input/output system (BIOS), an extensible firmware interface (EFI), and the like, and data for setting an operating system (OS), setting a network, and the like are stored in the ROM 502.

The RAM 503 is one example of a volatile semiconductor memory (storage device) from which programs and data are erased when the power source is turned off. For example, the RAM 503 is a dynamic random access memory (DRAM), a static random access memory (SRAM), or the like. The RAM 503 provides a work area to which various programs installed in the HDD 504 are loaded and then executed by the CPU 501.

The HDD 504 is one example of a non-volatile storage device in which programs, data, and the like are stored. The programs and data stored in the HDD 504 include OS, which is basic software for controlling the entire computer 500, applications for providing various functions on the OS, and the like. The computer 500 may utilize a storage device (e.g., a solid state drive (SSD) and the like) using a flash memory as a storage medium, instead of the HDD 504.

The input device 505 is a touch panel, operation keys, buttons, a keyboard, or a mouse used by a user to input various signals, or a microphone or the like for inputting audio data, such as voice.

The display device 506 is constituted by a display of liquid crystals, organic electro-luminescence (organic EL), or the like for displaying a screen, a speaker for outputting audio data, such as voice, and the like.

The communication I/F 507 is an interface coupled to a communication network to allow the computer 500 to perform data transmission.

The external I/F 508 is an interface with one or more external devices. Examples of the external device include a drive device 510 and the like.

The drive device 510 is a device for setting a recording medium 511. The recording medium 511 includes a medium on which information is optically, electrically, or magnetically recorded, such as a CD-ROM, a flexible disk, a magneto-optical disk, or the like. In addition, the recording medium 511 may include a semiconductor memory or the like on which information is electrically recorded, such as a ROM, a flash memory, or the like. The drive device 510 allows the computer 500 to read, write, or read and write the recording medium 511 via the external I/F 508.

The various programs to be installed in the HDD 504 are installed, for example, by setting a distributed recording medium 511 in the drive device 510 coupled to the external I/F 508, and reading the various programs recorded on the recording medium 511 with the drive device 510. Alternatively, the various programs to be installed in the HDD 504 may be installed by downloading the various programs through a communication network or another network that is different from the communication network via the communication I/F 507.

### <Functional configuration of image analysis system>

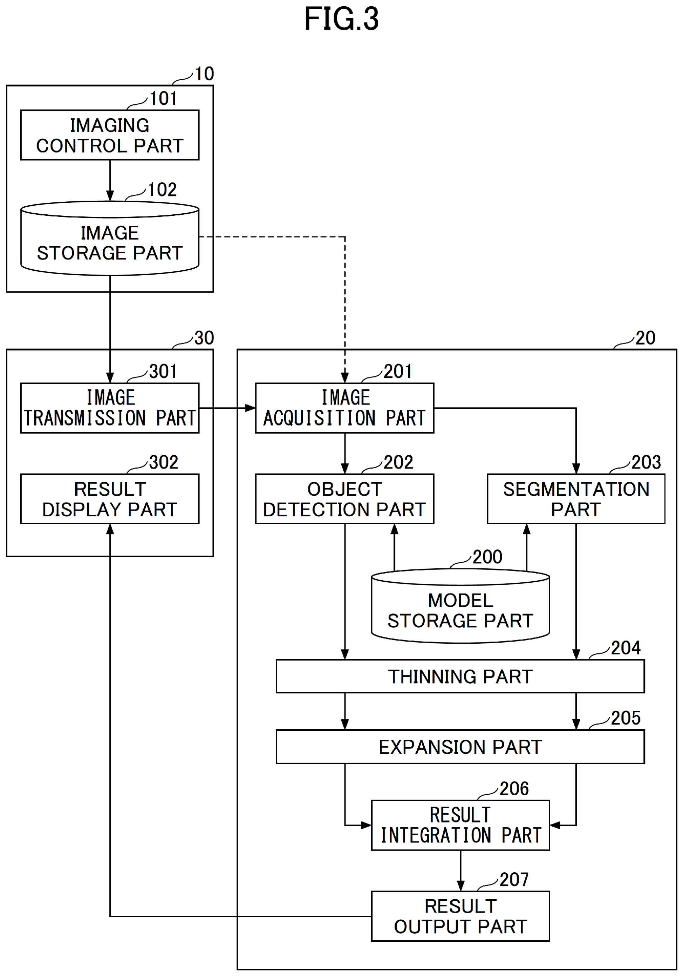

The functional configuration of the image analysis system of the present embodiment will be described with reference to Fig. 3. Fig. 3 is a block diagram illustrating an example of the functional configuration of the image analysis system 1.

### <<Functional configuration of image acquiring device>>

As illustrated in Fig. 3, the image acquiring device 10 of the present embodiment includes an imaging control part 101 and an image storage part 102.

The imaging control part 101 is implemented by a camera coupled to the external I/F 508 illustrated in Fig. 2. The image storage part 102 is implemented by the HDD 504 illustrated in Fig. 2.

The imaging control part 101 adjusts imaging conditions (an angle of view, imaging magnification, etc.) of the camera so that multiple fibers can be captured, thereby capturing a target image. The imaging control part 101 may capture a target image in response to an operation of a user, or may capture a target image when a predetermined condition is met. The predetermined condition is, for example, when a detection target is transported to a predetermined position of a detection device, or the like. The imaging control part 101 may capture a static image, or may capture a video and extract an image, in which multiple fibers are captured, from the video.

The image storage part 102 stores the target image captured by the imaging control part 101. The image storage part 102 may store information regarding the target image in association with the target image. The information regarding the target image includes, for example, an imaging date and time, information indicating an imaging target, imaging conditions, and the like.

### <<Functional configuration of image processing device>>

As illustrated in Fig. 3, the image processing device 20 of the present embodiment includes a model storage part 200, an image acquisition part 201, an object detection part 202 (one example of the first segmentation part), a segmentation part 203 (one example of the second segmentation part), a thinning part 204, an expansion part 205, a result integration part 206, and a result output part 207.

The model storage part 200 is implemented by the HDD 504 illustrated in Fig. 2. The image acquisition part 201, the object detection part 202, the segmentation part 203, the thinning part 204, the expansion part 205, the result integration part 206, and the result output part 207 are implemented by allowing one or more programs, which are loaded onto the RAM 503 from the HDD 504 illustrated in Fig. 2, to cause the CPU 501 to execute instructions.

A trained object detection model and a trained segmentation model are stored in the model storage part 200.

The object detection model is a machine learning model that performs instance segmentation. The object detection model is configured to, in response to an input of an image, output an object detection result in which objects included in an image are individually detected. The object detection result includes an individual-object segmentation result in which regions where objects are individually captured are recognized. As the object detection model of the present embodiment, as one example, Mask R-CNN is used. The object detection model is one example of the individual-object segmentation model.

The object detection model of the present embodiment has been trained to individually detect, from an input image, each of fibers captured in the image. The object detection model learns using training data in which a training label is assigned to an image that captures a metal surface where fibers are dispersed. The training label includes information indicating a range of regions capturing individual fibers and identification information identifying the fibers.

The segmentation model is a machine learning model that performs semantic segmentation. The segmentation model is configured to, in response to an input of an image, output a category segmentation result in which regions capturing desired objects within the image are recognized. As the segmentation model of the present embodiment, as one example, DeepLabv3 is used. The segmentation model is one example of the category segmentation model.

The segmentation model of the present embodiment has been trained to divide the input image into regions capturing the fibers and other regions. The segmentation model learns using training data in which a training label is assigned to an image capturing a metal surface where fibers are dispersed. The training label includes information indicating a range of regions in which fibers are captured.

The image acquisition part 201 receives the target image from the user terminal 30, thereby acquiring the target image. The image acquisition part 201 may acquire the target image from the image acquiring device 10 in response to a request from the user terminal 30.

The object detection part 202 detects individual fibers included in the target image, which is acquired by the image acquisition part 201, using the trained object detection model read from the model storage part 200, thereby generating an object detection result (one example of the first segmentation result) corresponding to each of the fibers in the target image.

The segmentation part 203 recognizes regions capturing the fibers (may be referred to as "fiber regions" hereinafter) from the target image, which is acquired by the image acquisition part 201, using the trained segmentation model read from the model storage part 200, thereby generating a segmentation result (one example of the second segmentation result) indicating the fiber regions.

The thinning part 204 performs thinning of the object detection result generated by the object detection part 202 and thinning of the segmentation result generated by the segmentation part 203. Specifically, the thinning part 204 binarizes the object detection results of the respective fibers, and performs thinning of each of the object detection results that have been binarized. In addition, the thinning part 204 superimposes the thinned object detection results of the respective fibers, thereby generating an individual-fiber thinning result (one example of the first thinning result). Further, the thinning part 204 binarizes the segmentation result indicating the fiber regions, and performs thinning of the binarized segmentation result. The thinned segmentation result indicating the fiber regions is referred to as a fiber-region thinning result (one example of the second thinning result).

The expansion part 205 expands the individual-fiber thinning result and the fiber-region thinning result, which are both generated by the thinning part 204.

The result integration part 206 generates an analysis result indicating axes of the fibers included in the target image based on the expanded individual-fiber thinning result, and the expanded fiber-region thinning result, which have been generated by the expansion part 205. The result integration part 206 may calculate a logical conjunction of the expanded individual-fiber thinning result and the expanded fiber-region thinning result, thereby generating an analysis result.

The result output part 207 transmits the output image indicating the analysis result generated by the result integration part 206 to the user terminal 30.

### <<Functional configuration of user terminal 30>>

As illustrated in Fig. 3, the user terminal 30 of the present embodiment includes an image transmission part 301 and a result display part 302.

The image transmission part 301 and the result display part 302 are implemented by allowing one or more programs, which are loaded onto the RAM 503 from the HDD 504 illustrated in Fig. 2, to cause the CPU 501 to execute instructions.

The image transmission part 301 acquires a target image from the image acquiring device 10 in response to an operation of a user. The image transmission part 301 transmits the target image acquired from the image acquiring device 10 to the image processing device 20.

The result display part 302 receives the output image from the image processing device 20. The result display part 302 displays the received output image on the display device 506.

### <Process flow of image analysis system>

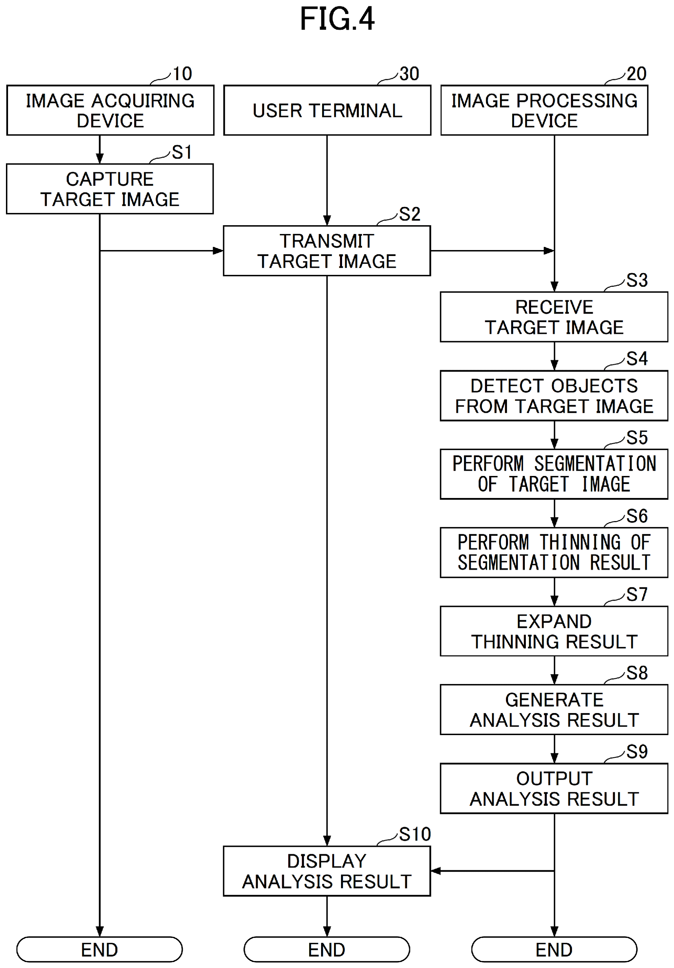

A process flow of an image processing method performed by the image analysis system 1 of the present embodiment will be described with reference to Figs. 4 to 7. Fig. 4 is a flowchart illustrating an example of the image processing method.

At step S1, the imaging control part 101 of the image acquiring device 10 adjusts a view angle of a camera so that fibers are captured, thereby capturing a target image. Next, the imaging control part 101 stores the captured target image in the image storage part 102.

At step S2, the image transmission part 301 of the user terminal 30 transmits a request for acquiring the target image to the image acquiring device 10 in response to an operation of a user. In response to the acquisition request received from the user terminal 30, the image acquiring device 10 reads the target image stored in the image storage part 102 and transmits the read target image to the user terminal 30. The image transmission part 301 transmits the target image received from the image acquiring device 10 to the image processing device 20.

At step S3, the image acquisition part 201 of the image processing device 20 receives the target image from the user terminal 30. Next, the image acquisition part 201 transmits the received target image to the object detection part 202 and the segmentation part 203.

At step S4, the object detection part 202 of the image processing device 20 receives the target image from the image acquisition part 201. Next, the object detection part 202 reads the trained object detection model from the model storage part 200.

Subsequently, the object detection part 202 inputs the target image to the trained object detection model. The object detection model individually detects each of fibers in the target image, and outputs an object detection result corresponding to each of the fibers. Thus, the object detection part 202 acquires the object detection results corresponding to the respective individual fibers. Then, the object detection part 202 transmits the object detection result corresponding to each of the fibers to the thinning part 204.

The object detection result corresponding to each of the fibers includes the detection result of the given individual fiber detected in the target image and reliability of the object detection result. The detection result corresponding to each of the fibers includes a mask score indicating the region where the fiber is detected and a score indicating objectness. In addition, the detection result for each of the fibers may include information indicating a mask obtained by binarizing the mask score with a threshold and indicating a bounding box.

The object detection part 202 may discard the detection results, in which the score indicating the objectness (0 or greater and 1 or less) is equal to or lower than a predetermined threshold, among the detection results for all of the fibers. The threshold may be arbitrarily determined. For example, the threshold can be set at 0.3.

At step S5, the segmentation part 203 of the image processing device 20 receives the target image from the image acquisition part 201. Next, the segmentation part 203 reads the trained segmentation model from the model storage part 200.

Subsequently, the segmentation part 203 inputs the target image to the trained segmentation model. The segmentation model recognizes fiber regions in the target image, and outputs a segmentation result indicating the fiber regions. Thus, the segmentation part 203 acquires the segmentation result indicating the fiber regions. Then, the segmentation part 203 transmits the segmentation result indicating the fiber regions to the thinning part 204.

The segmentation result indicating the fiber regions includes semantic scores indicating the fiber region, and reliability of the segmentation result.

At step S6, the thinning part 204 of the image processing device 20 receives the object detection result corresponding to each of the fibers from the object detection part 202. Moreover, the thinning part 204 receives the segmentation result indicating the fiber regions from the segmentation part 203.

Next, the thinning part 204 performs thinning of the object detection result corresponding to each of the fibers and thinning of the segmentation result indicating the fiber regions. Thus, the thinning part 204 acquires an individual-fiber thinning result and a fiber-region thinning result. Then, the thinning part 204 transmits the individual-fiber thinning result and the fiber-region thinning result to the expansion part 205.

Specifically, the thinning part 204 performs thinning of the object detection result in the following manner. First, the thinning part 204 binarizes the object detection result corresponding to each of the fibers. Next, the thinning part 204 performs thinning of each of the binarized object detection results of the respective fibers. Subsequently, the thinning part 204 superimposes the thinned object detection results of the respective fibers, thereby generating an individual-fiber thinning result.

Moreover, the thinning part 204 performs thinning of the segmentation result in the following manner. First, the thinning part 204 binarizes the segmentation result indicating the fiber regions. Next, the thinning part 204 performs thinning of the binarized segmentation result.

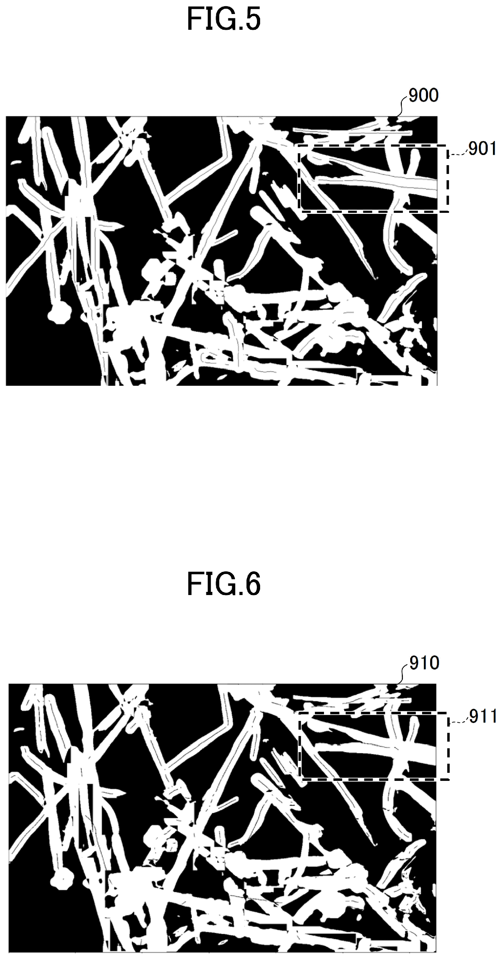

Fig. 5 is a diagram illustrating an example of the individual-fiber thinning result in the present embodiment. As illustrated in Fig. 5, axes of fibers are individually depicted in a region 901 where the fibers are densely arranged in the individual-fiber thinning result 900. However, it is difficult to accurately measure a length or thickness of each fiber because the fibers detected in the region 901 partially overlap with one another.

Fig. 6 is a diagram illustrating an example of the fiber-region thinning result in the present embodiment. As illustrated in Fig. 6, an axis of a region, in which fibers overlap with each other, is depicted in the region 911 where the fibers are densely arranged in the fiber-region thinning result 910. This axis is not aligned with any axes of the fibers captured in the region 911.

It can be understood by the comparison between Fig. 5 and Fig. 6 that detected axes of fibers in the target image, in which the fibers partially overlapping with one another are captured, vary between the individual-object segmentation model and the category segmentation model.

The description will be made referring back to Fig. 4. At step S7, the expansion part 205 of the image processing device 20 receives the individual-fiber thinning result and the fiber-region thinning result from the thinning part 204. Next, the expansion part 205 expands the individual-fiber thinning result and the fiber-region thinning result. Then, the expansion part 205 transmits the expanded individual-fiber thinning result and the expanded fiber-region thinning result to the result integration part 206.

At step S8, the result integration part 206 of the image processing device 20 receives the expanded individual-fiber thinning result and the expanded fiber-region thinning result from the expansion part 205. Next, the result integration part 206 generates an analysis result based on the individual-fiber thinning result and the fiber-region thinning result. Then, the result integration part 206 transmits the analysis result to the result output part 207.

For example, the result integration part 206 may calculate a logical conjunction of the individual-fiber thinning result and the fiber-region thinning result, thereby generating an analysis result. The analysis result indicates the overlap between the individual-fiber thinning result and the fiber-region thinning result.

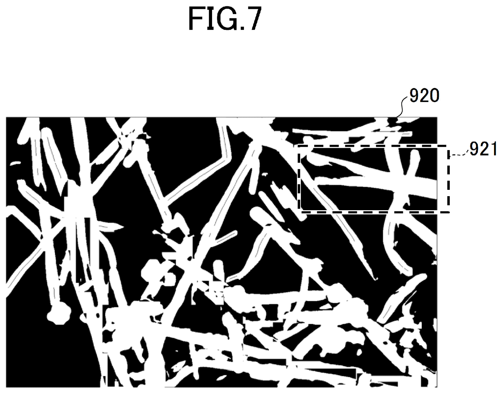

Fig. 7 is a diagram illustrating an example of the analysis result in the present embodiment. As illustrated in Fig. 7, the analysis result 920 does not indicate any axes of the fibers in the region 921 where the fibers are densely arranged. This is because the axes depicted in the region 901 of Fig. 5 and the axes depicted in the region 911 of Fig. 6 do not overlap. The analysis result 920 indicates only the axes of the fibers commonly detected by both the individual-object segmentation model and the category segmentation model. Therefore, the axes of the fibers indicated in the analysis result 920 do not overlap with other fibers, and represent shapes of the fibers from which lengths or thicknesses can be measured with high accuracy.

The description will be made referring back to Fig. 4. At step S9, the result output part 207 of the image processing device 20 receives the analysis result from the result integration part 206. Next, the result output part 207 generates an output image indicating the analysis result of the axes of the fibers captured in the target image based on the analysis result. Then, the result output part 207 transmits the output image to the user terminal 30. The analysis result may include, regarding the fibers whose axis have been detected, the number and distribution of the fibers relative to a fiber length and fiber diameter, or may include calculated statistical values, such as an average value, a median value, a standard deviation, and the like.

At step S10, the result display part 302 of the user terminal 30 receives the output image from the image processing device 20. Then, the result display part 302 displays the received output image on the display device 506.

### <Effects of embodiment>

The image processing device 20 of the present embodiment outputs an analysis result indicating axes of fibers in a target image based on a first thinning result obtained by thinning regions in which the fibers in the target image are individually detected, and a second thinning result obtained by thinning regions in which the fibers in the target image are captured. Since the thinning results based on the different types of the segmentation results are used, axes of fibers intersecting with one another can be detected, and only axes of fibers having outlines that do not overlap with other fibers can be detected. According to one aspect of the present embodiment, axes of fibers in an image can be accurately detected.

The image processing device 20 of the present embodiment may detect axes of fibers based on a logical conjunction of the first thinning result and the second thinning result. The image processing device 20 may expand the first thinning result and the second thinning result. According to the present embodiment, the axes commonly depicted in the two thinning results are detected, and therefore an analysis result indicating only the accurately detected axes can be generated.

### <First modification example>

In the above embodiment, the example in which the segmentation part 203 divides the target image into the fiber regions and other regions using the category segmentation model has been described. The segmentation part 203 may divide the target image into fiber regions and another region through binarization. For example, if the color of the fibers captured in the target image is the same, and the background color of the target image is uniform, the fiber regions and another region can be divided by binarization. In this case, the thinning part 204 can omit binarization performed before thinning.

### <Second modification example>

The first modification example describes the example in which the segmentation part 203 divides the target image into the fiber regions and other regions by binarization. The segmentation part 203 may divide the target image into the fiber regions and other regions by binarizing the first segmentation result. As in the first modification example, the target image can be divided into the fiber regions and other regions by binarization. In this case, the thinning part 204 can omit binarization performed before thinning.

When the segmentation is performed by binarization, the amount of calculation can be reduced. For example, it is not necessary to train the category segmentation model. Moreover, the amount of calculation for recognizing the fiber regions from the target image, and the amount of calculation for binarizing the segmentation result can be reduced.

### [Additional notes]

Each of the functions of the embodiments described above can be implemented by one or more processing circuits. In the present specification, the term "processing circuit" includes a processor that has been programed to execute each of the above functions using software, such as a central processing unit (CPU), a graphics processing unit (GPU), or the like that is implemented by an electronic circuit, or a device designed to execute each of the above functions, such as an application specific integrated circuit (ASIC), a digital signal processor (DSP), a field programmable gate array (FPGA), a conventional circuit module, or the like.

### DESCRIPTION OF REFERENCE NUMERALS

- 1:: image analysis system
- 10:: image acquiring device
- 101:: imaging control part
- 102:: image storage part
- 20:: image processing device
- 200:: model storage part
- 201:: image acquisition part
- 202:: object detection part
- 203:: segmentation part
- 204:: thinning part
- 205:: expansion part
- 206:: result integration part
- 207:: result output part
- 30:: user terminal
- 301:: image transmission part
- 302:: result display part

## Claims

1. An image processing device, comprising:
an image acquisition part configured to acquire a target image in which fibers are captured;
a first segmentation part configured to generate a first segmentation result indicating regions in which the fibers are individually detected in the target image, respectively, using an individual-object segmentation model;
a second segmentation part configured to generate a second segmentation result indicating regions in which the fibers are captured in the target image;
a thinning part configured to generate a first thinning result and a second thinning result that are the first segmentation result and the second segmentation result subjected to thinning, respectively; and
a result output part configured to output an analysis result indicating axes of the fibers included in the target image based on the first thinning result and the second thinning result.

2. The image processing device according to claim 1,
wherein the analysis result is a logical conjunction of the first thinning result and the second thinning result.

3. The image processing device according to claim 2, further comprising:
an expansion part configured to expand the first thinning result and the second thinning result.

4. The image processing device according to any one of claims 1 to 3,
wherein the second segmentation part is configured to recognize the regions in which the fibers are captured using a category segmentation model.

5. The image processing device according to claim 4,
wherein the category segmentation model is DeepLab or U-Net.

6. The image processing device according to any one of claims 1 to 3,
wherein the second segmentation part is configured to binarize the target image.

7. The image processing device according to any one of claims 1 to 6,
wherein the first segmentation part is configured to recognize the regions in which the fibers are individually captured, respectively, using the individual-object segmentation model.

8. The image processing device according to claim 7,
wherein the individual-object segmentation model is Mask R-CNN or YOLACT.

9. The image processing device according to any one of claims 1 to 8,
wherein the second segmentation part is configured to binarize the first segmentation result.

10. An image processing method, comprising
causing a computer to perform:
a process of acquiring a target image in which fibers are captured;
a process of generating a first segmentation result indicating regions in which the fibers are individually detected in the target image, respectively, using an individual-object segmentation model;
a process of generating a second segmentation result indicating regions in which the fibers are captured in the target image;
a process of generating a first thinning result and a second thinning result that are the first segmentation result and the second segmentation result subjected to thinning, respectively; and
a process of outputting an analysis result indicating axes of the fibers included in the target image based on the first thinning result and the second thinning result.

11. A program for causing a computer to perform:
a process of acquiring a target image in which fibers are captured;
a process of generating a first segmentation result indicating regions in which the fibers are individually detected in the target image, respectively, using an individual-object segmentation model;
a process of generating a second segmentation result indicating regions in which the fibers are captured in the target image;
a process of generating a first thinning result and a second thinning result that are the first segmentation result and the second segmentation result subjected to thinning, respectively; and
a process of outputting an analysis result indicating axes of the fibers included in the target image based on the first thinning result and the second thinning result.

## Patentansprüche

1. Bildverarbeitungsvorrichtung, umfassend:
einen Bilderfassungsteil, der konfiguriert ist, ein Zielbild zu erfassen, in dem Fasern erfasst sind;
einen ersten Segmentierungsteil, der konfiguriert ist, unter Verwendung eines Einzelobjekt-Segmentierungsmodells ein erstes Segmentierungsergebnis zu erzeugen, das Bereiche angibt, in denen die Fasern jeweils einzeln in dem Zielbild erfasst werden;
einen zweiten Segmentierungsteil, der konfiguriert ist, ein zweites Segmentierungsergebnis zu erzeugen, das Bereiche angibt, in denen die Fasern in dem Zielbild erfasst sind;
einen Verdünnungsteil, der konfiguriert ist, ein erstes Verdünnungsergebnis und ein zweites Verdünnungsergebnis zu erzeugen, die das erste Segmentierungsergebnis bzw. das zweite Segmentierungsergebnis sind, welche einer Verdünnung unterzogen wurden; und
einen Ergebnisausgabeteil, der konfiguriert ist, ein Analyseergebnis auszugeben, das Achsen der in dem Zielbild enthaltenen Fasern basierend auf dem ersten Verdünnungsergebnis und dem zweiten Verdünnungsergebnis angibt.

2. Bildverarbeitungsvorrichtung nach Anspruch 1, wobei das Analyseergebnis eine logische Konjunktion des ersten Verdünnungsergebnisses und des zweiten Verdünnungsergebnisses ist.

3. Bildverarbeitungsvorrichtung nach Anspruch 2, ferner umfassend:
einen Erweiterungsteil, der konfiguriert ist, das erste Verdünnungsergebnis und das zweite Verdünnungsergebnis zu erweitern.

4. Bildverarbeitungsvorrichtung nach einem der Ansprüche 1 bis 3, wobei der zweite Segmentierungsteil konfiguriert ist, unter Verwendung eines Kategoriesegmentierungsmodells die Bereiche, in denen die Fasern erfasst sind, zu erkennen.

5. Bildverarbeitungsvorrichtung nach Anspruch 4, wobei das Kategoriesegmentierungsmodell DeepLab oder U-Net ist.

6. Bildverarbeitungsvorrichtung nach einem der Ansprüche 1 bis 3, wobei der zweite Segmentierungsteil konfiguriert ist, das Zielbild zu binarisieren.

7. Bildverarbeitungsvorrichtung nach einem der Ansprüche 1 bis 6, wobei der erste Segmentierungsteil konfiguriert ist, die Bereiche, in denen die Fasern jeweils einzeln erfasst sind, unter Verwendung des Einzelobjekt-Segmentierungsmodells zu erkennen.

8. Bildverarbeitungsvorrichtung nach Anspruch 7, wobei das Einzelobjekt-Segmentierungsmodell Mask R-CNN oder YOLACT ist.

9. Bildverarbeitungsvorrichtung nach einem der Ansprüche 1 bis 8, wobei der zweite Segmentierungsteil konfiguriert ist, das erste Segmentierungsergebnis zu binarisieren.

10. Bildverarbeitungsverfahren, umfassend das Veranlassen eines Computers, Folgendes durchzuführen:
einen Prozess des Erfassens eines Zielbilds, in dem Fasern erfasst sind;
einen Prozess des Erzeugens eines ersten Segmentierungsergebnisses, das Bereiche angibt, in denen die Fasern jeweils einzeln in dem Zielbild erfasst werden, unter Verwendung eines Einzelobjekt-Segmentierungsmodells;
einen Prozess des Erzeugens eines zweiten Segmentierungsergebnisses, das Bereiche angibt, in denen die Fasern in dem Zielbild erfasst sind;
einen Prozess des Erzeugens eines ersten Verdünnungsergebnisses und eines zweiten Verdünnungsergebnisses, die das erste Segmentierungsergebnis bzw. das zweite Segmentierungsergebnis sind, welche einer Verdünnung unterzogen wurden; und
einen Prozess des Ausgebens eines Analyseergebnisses, das Achsen der in dem Zielbild enthaltenen Fasern basierend auf dem ersten Verdünnungsergebnis und dem zweiten Verdünnungsergebnis angibt.

11. Programm zum Veranlassen eines Computers, Folgendes durchzuführen:
einen Prozess des Erfassens eines Zielbilds, in dem Fasern erfasst sind;
einen Prozess des Erzeugens eines ersten Segmentierungsergebnisses, das Bereiche angibt, in denen die Fasern jeweils einzeln in dem Zielbild erfasst werden, unter Verwendung eines Einzelobjekt-Segmentierungsmodells;
einen Prozess des Erzeugens eines zweiten Segmentierungsergebnisses, das Bereiche angibt, in denen die Fasern in dem Zielbild erfasst sind;
einen Prozess des Erzeugens eines ersten Verdünnungsergebnisses und eines zweiten Verdünnungsergebnisses, die das erste Segmentierungsergebnis bzw. das zweite Segmentierungsergebnis sind, welche einer Verdünnung unterzogen wurden; und
einen Prozess des Ausgebens eines Analyseergebnisses, das Achsen der in dem Zielbild enthaltenen Fasern basierend auf dem ersten Verdünnungsergebnis und dem zweiten Verdünnungsergebnis angibt.

## Revendications

1. Dispositif de traitement d'images, comprenant :
une partie d'acquisition d'images configurée pour acquérir une image cible dans laquelle des fibres sont capturées ;
une première partie de segmentation configurée pour générer un premier résultat de segmentation indiquant les régions dans lesquelles les fibres sont détectées individuellement dans l'image cible, respectivement, à l'aide d'un modèle de segmentation d'objets individuels ;
une deuxième partie de segmentation configurée pour générer un deuxième résultat de segmentation indiquant les régions dans lesquelles les fibres sont capturées dans l'image cible ;
une partie de squelettisation configurée pour générer un premier résultat de squelettisation et un deuxième résultat de squelettisation qui sont respectivement le premier résultat de segmentation et le deuxième résultat de segmentation soumis à une squelettisation; et
une partie de sortie de résultat configurée pour fournir un résultat d'analyse indiquant les axes des fibres présentes dans l'image cible sur la base du premier résultat de squelettisation et du deuxième résultat de squelettisation.

2. Dispositif de traitement d'images selon la revendication 1, dans lequel le résultat d'analyse est une conjonction logique du premier résultat de squelettisation et du deuxième résultat de squelettisation.

3. Dispositif de traitement d'images selon la revendication 2, comprenant en outre : une partie d'expansion configurée pour étendre le premier résultat de squelettisation et le deuxième résultat de squelettisation.

4. Dispositif de traitement d'images selon l'une quelconque des revendications 1 à 3, dans lequel la deuxième partie de segmentation est configurée pour reconnaître les régions dans lesquelles les fibres sont capturées à l'aide d'un modèle de segmentation par catégories.

5. Dispositif de traitement d'images selon la revendication 4, dans lequel le modèle de segmentation par catégories est DeepLab ou U-Net.

6. Dispositif de traitement d'images selon l'une quelconque des revendications 1 à 3, dans lequel la deuxième partie de segmentation est configurée pour binariser l'image cible.

7. Dispositif de traitement d'images selon l'une quelconque des revendications 1 à 6, dans lequel la première partie de segmentation est configurée pour reconnaître les régions dans lesquelles les fibres sont capturées individuellement, respectivement, à l'aide d'un modèle de segmentation d'objets individuels.

8. Dispositif de traitement d'images selon la revendication 7, dans lequel le modèle de segmentation d'objets individuels est Mask R-CNN ou YOLACT.

9. Dispositif de traitement d'images selon l'une quelconque des revendications 1 à 8, dans lequel la deuxième partie de segmentation est configurée pour binariser le premier résultat de segmentation.

10. Procédé de traitement d'images, permettant qu'un ordinateur exécute :
un processus d'acquisition d'une image cible dans laquelle des fibres sont capturées ;
un processus de génération d'un premier résultat de segmentation indiquant les régions dans lesquelles les fibres sont détectées individuellement dans l'image cible, respectivement, à l'aide d'un modèle de segmentation d'objets individuels;
un processus de génération d'un deuxième résultat de segmentation indiquant les régions dans lesquelles les fibres sont capturées dans l'image cible ;
un processus de génération d'un premier résultat de squelettisation et d'un deuxième résultat de squelettisation qui correspondent respectivement au premier résultat de segmentation et au deuxième résultat de segmentation soumis à une squelettisation; et
un processus consistant à fournir un résultat d'analyse indiquant les axes des fibres présentes dans l'image cible sur la base du premier résultat de squelettisation et du deuxième résultat de squelettisation.

11. Programme permettant à un ordinateur d' effectuer :
un processus d'acquisition d'une image cible dans laquelle des fibres sont capturées ;
un processus consistant à générer un premier résultat de segmentation indiquant les régions dans lesquelles les fibres sont détectées individuellement dans l'image cible, respectivement, à l'aide d'un modèle de segmentation d'objets individuels ;
un processus de génération d'un deuxième résultat de segmentation indiquant les régions dans lesquelles les fibres sont capturées dans l'image cible ; un processus consistant à générer un premier résultat de squelettisation et un deuxième résultat de squelettisation qui correspondent respectivement au premier résultat de segmentation et au deuxième résultat de segmentation soumis à une squelettisation ; et
un processus permettant de fournir un résultat d'analyse indiquant les axes des fibres présentes dans l'image cible sur la base du premier résultat de squelettisation et du deuxième résultat de squelettisation.
